# EUROPÄISCHE PATENTSCHRIFT

(11) **EP 0 611 688 B1**
(45) Veröffentlichungstag und Bekanntmachung des Hinweises auf die Patenterteilung: **18.06.1997**
(21) Anmeldenummer: 94250037.2
(22) Anmeldetag: 17.02.1994
(51) Int. Cl.: B61F 5/30, F16F 1/26, B60G 11/10

(54) **Schakengehänge für Laufwerke von Schienenfahrzeugen**
Chain-link suspension for the running gear of railway vehicles
Suspension pendulaire pour le train de roulement de véhicules ferroviaires

(30) Priorität: 17.02.1993 DE 4305518
(43) Veröffentlichungstag der Anmeldung: 24.08.1994
(73) Patentinhaber: Deutsche Waggonbau AG, 12527 Berlin (DE)
(72) Erfinder: Wenke, Siegbert, D-02943 Reichwalde (DE); Rode, Walter, D-06130 Halle (DE); Streich, Rüdiger, D-81927 München (DE); Koch, Hartmut, D-04357 Leipzig (DE); Lange, Rüdiger, D-02906 Niesky (DE); Lubosch, Klaus, D-02906 Niesky (DE); Bartel, Manfred, D-02906 Niesky (DE)
(74) Vertreter: Köhler, Reimund

(56) Entgegenhaltungen:
- DD-A- 119 752
- DD-A- 280 508
- FR-A- 1 470 858
- GB-A- 1 068 851
- US-A- 1 841 015
- US-A- 2 245 201

## Beschreibung

Die Erfindung betrifft ein Schakengehänge für die Aufhängung von Blatttragfedern an Schienenfahrzeugen, insbesondere zum nachträglichen Einbau in Standardwagen des internationalen Eisenbahnverbandes.

Es sind Schakengehänge nach DD 119 752 bekannt, bei denen durch eine Vergrößerung der Rückstellkraft der Radsatzlängsführung über die Verringerung des Abstandes der Federbolzen zueinander bis nahe an einen konstruktiv noch möglichen Kleinstabstand oder bis an das aus der Lauftechnik erforderliche Maß, das Ziel der Verbesserung der Laufgüte bei gleichzeitiger Erhöhung der Geschwindigkeit und der Achsfahrmasse erreicht wird.

Diese bekannte Ausführungsform hat jedoch den Nachteil, daß mit der Erhöhung der Rückstellkräfte des Radsatzes in Wagenlängsrichtung zwangsläufig die radiale Einstellmöglichkeit desselben erschwert wird und dadurch in Gleisbögen ein hoher Verschleiß an den Radsätzen und Gleisanlagen auftritt.

Weiterhin ist bekannt, das oben genannte Ziel durch Erhöhung der Querdämpfung der Radsatzführung zu erreichen. Nach DD 280 508 wird dazu ein Hohlraum zwischen Schake und Schakenstein angeordnet. Die bekannte Ausführung nach DD 280 508 hat den Nachteil, daß bei der Anordnung des Hohlraumes in der Auflagefläche zwischen Schake und Schakenstein und bei Verwendung dieser Teile in den Standardabmessungen die angestrebten Fahrgeschwindigkeiten bei hohen Achsfahrmassen nicht erreicht werden.

Die allgemein bekannten Verspannungen der Federbolzen mit den Schakensteinen mittels von Bolzenaußenseite eingebrachten bekannten Federn haben den Nachteil, daß ungünstige Verschleißflächen zwischen Federbocklager und Schakenstein gebildet werden.

Der Erfindung liegt die Aufgabe zugrunde, ein Schakengehänge für Fahrzeuglaufwerke zu schaffen, das hohe Fahrgeschwindigkeiten auch bei hohen Achsfahrmassen zuläßt, zugleich eine hohe Laufgüte gewährleistet, in den von vorgegebenen Fahrzeugparametern stark eingegrenzten Einbauraum eingebaut werden kann und darüber hinaus geringen Verschleiß aufweist.

Erfindungsgemäß wird die Aufgabe durch die Merkmale des Anspruchs 1 gelöst.

Um den eingegrenzten Einbauraum einzuhalten, ist es für den oberen Schakenauflagebereich, den oberen Schakenstein und den oberen Federbolzen zweckmäßig, die Abmessungen der Tauschteile zu übernehmen. Der Durchmesser des unteren Auflagebereiches einschließlich des Schakensteines und/oder der Durchmesser des unteren Federbolzens sind so zu vergrößern und vorzugsweise mit einer Abflachung zu versehen, daß bei hohen Fahrgeschwindigkeiten mit großen Achsfahrmassen erforderliche Quer- und Längsdämpfungswerte erreicht werden. Aus Verschleißgründen ist es dabei zweckmäßig, den unteren Federbolzen in der Federbockbohrung durch eine zwischen den Schaken angeordnete Verschraubung gegen Verdrehen zu sichern und den Auflagebereich des Schakensteins bzw. den Federbolzen zur Erhöhung der Längsdämpfung mit einer Vertiefung bzw. Abflachung zu versehen.

Nach einem weiteren Merkmal der Erfindung ist es zweckmäßig, bei in der Länge der Schakengehänge begrenzten Einbauverhältnissen zur räumlichen Unterbringung des vergrößerten Durchmessers des Auflagebereiches einschließlich Schakensteinen oder zur Erhöhung der Quersteifigkeit der Radsatzführung die Schaken in Wagenquerrichtung zueinander gespreizt anzuordnen.

Bei Schakengehängen mit allseitig begrenzten Einbauräumen, z. B. bei Drehgestellen, wird zur Erreichung der notwendigen Schakendurchmesser in deren Auflagebereichen erfindungsgemäß vorgeschlagen, die Schaken an ihren Ecken abzuflachen und/oder so einzuschnüren, daß die Schake einem Rechteckrahmen mit in den Ecken liegenden elastischen Gelenken nahekommt.

Zur Entlastung der "elastischen Gelenke" sind erfindungsgemäß die Rahmenstiele mindestens einfach durch unter- bzw. zweifach durch unter- und oberhalb der Schakensteine angeordnete Verbindungsstege untereinander verbunden.

Mit dem erfindungsgemäßen Schakengehänge wird eine hohe Laufgüte der Fahrzeuge selbst bei hohen Achsfahrmassen auch in Gleisbögen erreicht. Außerdem kann das neue Schakengehänge problemlos in den durch UIC-Fahrzeugparameter stark eingegrenzten Einbauraum auch nachträglich bei UIC-Standardwagen eingebaut werden.

Es ist im Sinne der Erfindung, die neuen Merkmale auch bei Doppelschakengehängen anzuwenden.

Die Erfindung soll an einem Ausführungsbeispiel näher erläutert werden. In den zugehörigen Zeichnungen zeigen:
- Fig.1:: einen Schnitt durch das erfindungsgemäße Schakengehänge,
- Fig.2:: einen Schnitt durch den abgeflachten Federbolzen,
- Fig.3:: einen Schnitt durch den Schakenstein mit Vertiefung,
- Fig.4:: einen Schnitt durch das erfindungsgemäße Schakengehänge mit in Wagenquerrichtung zueinander gespreizt angeordneten Schaken,
- Fig.5:: erfindungsgemäße Schake mit abgerundeten Ecken und Verbindungsstegen,
- Fig.6:: Längsschnitt durch die Schake nach Fig.5.

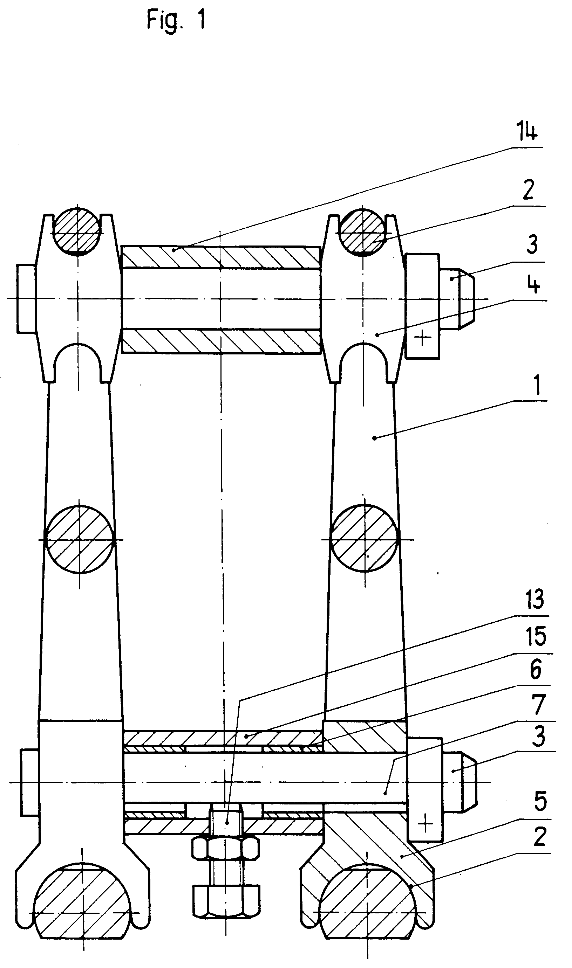

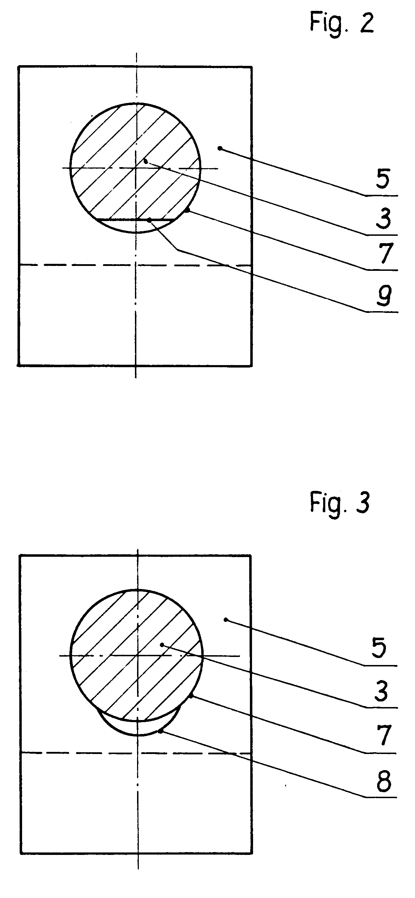

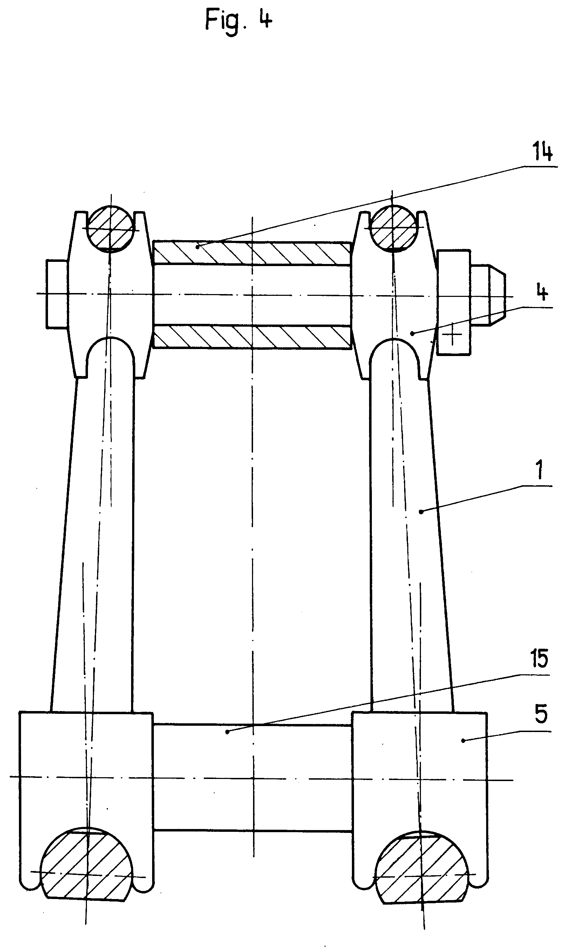

Gemäß Fig.1 wird das Schakengehänge gebildet aus den beiden Schaken 1, den oberen Schakensteinen 4, den unteren Schakensteinen 5, dem Federauge 14, dem Federbocklager 15, dem oberen und dem unteren Federbolzen 3 und der Verschraubung 13. Die Erfindung sieht dabei vor, daß die Schaken 1 in ihren Auflagebereichen 2 und/oder die Federbolzen 3 der Schakengehänge unterschiedliche Durchmesser aufweisen. Es ist als zweckmäßig herausgefunden worden, für den oberen Auflagebereich 2 der Schake 1, sowie für den oberen Schakenstein 4 und den oberen Federbolzen 3 weitgehendst die Abmessungen der UIC-Tauschteile zu übernehmen. Der Durchmesser des unteren Auflagebereiches 2 einschließlich des Schakensteines 5 und/oder der Durchmesser des unteren Federbolzens 3 sind derart vergrößert worden, daß die bei hohen Fahrgeschwindigkeiten und großen Achsfahrmassen erforderlichen Quer- und Längsdämpfungswerte erreicht werden. Dabei ist es vorteilhaft zur Erhöhung der Längsdämpfung in dem Auflagebereich 7 des Federbolzens 3 gemäß Fig. 2 eine Abflachung 9 oder in dem Auflagebereich 7 des Schakensteins 5 eine Vertiefung 8 gemaß Fig.3 vorzusehen. Dabei wird der untere Federbolzen 3 in der Federbockbohrung 6 zwischen den Schaken 1 mittels bekannter Verschraubungen 13 gegen Verdrehen gesichert. Bei begrenzten Einbauverhältnissen können zur besseren Unterbringung der vergrößerten Durchmesser des Auflagebereichs 2 einschließlich Schakensteine 5 und zur Erhöhung der Querfederkonstante der Radsatzführung die Schaken 1 in Wagenquerrichtung gemäß Fig.4 gespreizt angeordnet werden. Durch diese gespreizte Anordnung der Schaken 1 wird erreicht, daß durch den im Gleisbogen besonders bei hohen Fahrgeschwindigkeiten und Achsfahrmassen auftretenden Fliehkraftüberschuß ein Anlegen der Achshalter an die Achslagerführungen weitgehendst vermieden und dadurch eine Verbesserung der Laufgüte besonders horizontal-quer erreicht wird.

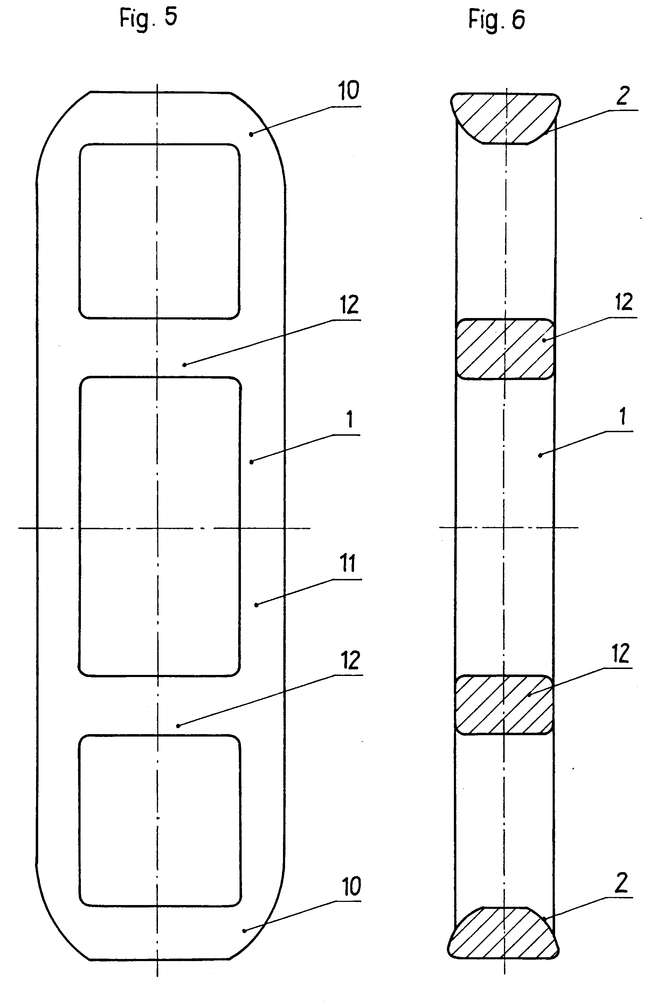

Bei Schakengehängen mit allseitig begrenzten Einbauräumen sieht die Erfindung vor, die Schaken 1 an ihren Ecken 10 abzuflachen und/oder sie einzuschnüren. Dabei bilden die Schaken 1 gemäß Fig.5 und 6 einen Rechteckrahmen, deren Ecken sich nahezu wie ein elastisches Gelenk verhalten, wobei zur Entlastung dieser "elastischen Gelenke" die Rahmenstiele 11 mindestens einfach durch Verbindungsstege 12 untereinander verbunden sind. Es ist im Sinne der Erfindung mehrfach Stege anzuordnen, die unter- und oberhalb der Schakensteine 4;5 angeordnet sein können.

### Aufstellung der verwendeten Bezugszeichen

- 1: Schake
- 2: Auflagebereich
- 3: Federbolzen
- 4;5: Schakenstein
- 6: Federbockbohrung
- 7: Auflagebereich
- 8: Vertiefung
- 9: Abflachung
- 10: Ecke
- 11: Rahmenstiel
- 12: Verbindungssteg
- 13: Verschraubung
- 14: Federauge
- 15: Federbocklager

## Patentansprüche

1. Schakengehänge für Laufwerke von Schienenfahrzeugen, bestehend aus Schaken (1), den oberen und unteren Schakensteinen (4 und 5), die mit einem oberen bzw. unteren Auflagebereich (2) der Schaken kooperieren, einem Federauge (14) und Federbocklager (15), den oberen und unteren Federbolzen (3) die jeweils im oberen Schakenstein und Federauge und im unteren Schakenstein mit Federbocklager angeordnet sind sowie einer Federbolzensicherung, dadurch gekennzeichnet, daß die Schaken (1) in ihren oberen und unteren Auflagebereich (2) und/oder die Federbolzen (3) des Schakengehänges unterschiedliche Durchmesser aufweisen, wobei der obere Auflagebereich (2) der Schake (1), der obere Schakenstein (4) und der obere Federbolzen (3) weitgehendst mit den Maßen der UIC-Tauschteile ausgebildet sind und der Durchmesser des unteren Auflagebereiches (2) der Schake (1) einschließlich des Schakensteines (5) und/oder der Durchmesser des unteren Federbolzens (3) größer als die oberen Auflagebereiche (2), die oberen Schakensteine (4) und/oder die oberen Federbolzen (3) ausgebildet sind.

2. Schakengehänge nach Anspruch 1, dadurch gekennzeichnet, daß der Auflagebereich (7) des Schakensteins (5) mit einer Vertiefung (8) oder der Federbolzen (3) im Auflagebereich (7) mit einer Abflachung (9) versehen ist.

3. Schakengehänge nach Anspruch 1 und 2, dadurch gekennzeichnet, daß die Schaken (1) in Wagenquerrichtung zueinander gespreizt angeordnet sind.

4. Schakengehänge nach Anspruch 1 bis 3, dadurch gekennzeichnet, daß die Schaken (1) an ihren Ecken (10) abgeflacht und/oder eingeschnürt ausgebildet und zwischen den Rahmenstielen (11) Verbindungsstege (12) ein- oder mehrfach unter- und oberhalb der Schakensteine (4;5) angeordnet sind.

5. Schakengehänge nach Anspruch 1 bis 4, dadurch gekennzeichnet, daß zwischen den Schaken (1) an dem Federbocklager (15) eine Verschraubung (13) für die Verdrehsicherung des Federbolzens (3) vorgesehen ist.

## Claims

1. Link hanger for running gear of rail vehicles, consisting of links (1), the top and bottom link blocks (4 and 5), which cooperate with a top and a bottom supporting area (2) respectively of the links, a spring eye (14) and spring-bracket bearing (15), the top and bottom spring bolts (3), which are arranged respectively in the top link block and spring eye and in the bottom link block with spring-bearing bracket, and a spring-bolt locking means, characterized in that the links (1), in their top and bottom supporting area, and/or the spring bolts (3) of the link hanger have different diameters, the top supporting area (2) of the link (1), the top link block (4) and the top spring bolt (3) being designed as far as possible to the dimensions of the UIC replacement parts, and the diameter of the bottom supporting area (2) of the link (1) including the link block (5) and/or the diameter of the bottom spring bolt (3) being designed to be larger than the top supporting area (2), the top link blocks (4) and/or the top spring bolts (3).

2. Link hanger according to Claim 1, characterized in that the supporting area (7) of the link block (5) is provided with a recess (8), or the spring bolt (3) in the supporting area (7) is provided with a flattening (9).

3. Link hanger according to Claims 1 and 2, characterized in that the links (1) are arranged spread apart from one another in the transverse direction of the wagon.

4. Link hanger according to Claims 1 to 3, characterized in that the links (1) are designed to be flattened and/or narrowed down at their corners (10) and single or multiple connecting webs (12) are arranged between the frame stems (11) below and above the link blocks (4;5).

5. Link hanger according to Claims 1 to 4, characterized in that a screw connection (13) for the anti-rotation locking of the spring bolt (3) is provided between the links (1) on the spring-bracket bearing (15).

## Revendications

1. Suspension pendulaire pour trains de roulement de voitures de chemin de fer, constituée de maillons de chaîne (1), de fixations supérieure et inférieure (4 et 5) des maillons de chaîne qui coopèrent avec une zone supérieure et une zone inférieure d'appui (2) des maillons de chaîne, d'un oeillet de ressort (14), et d'un logement (15) de support de ressort, de boulons de ressort supérieur et inférieur (3) qui sont disposés respectivement dans la fixation supérieure du maillon de chaîne, dans l'oeillet de ressort et dans la fixation intérieure du maillon de chaîne comportant le logement du support de ressort, ainsi que d'une fixation du boulon de ressort, caractérisée en ce que dans leur zone supérieure d'appui (2) et dans leur zone inférieure d'appui (2), les maillons de chaîne (1) et/ou les boulons de ressort (3) de la suspension pendulaire présentent un diamètre différent, la zone supérieure d'appui (2) du maillon de chaîne (1), la fixation supérieure (4) du maillon de chaîne et le boulon de ressort supérieur (3) étant réalisés très largement dans les dimensions des pièces de rechange de l'UIC, et le diamètre de la zone inférieure d'appui (2) du maillon de chaîne (1), y compris la fixation (5) du maillon de chaîne et/ou le diamètre du boulon de ressort inférieur (3), sont réalisés dans des dimensions plus grandes que celles des zones supérieures d'appui (2) des fixations supérieures (4) de maillons de chaîne et/ou des boulons de ressort supérieurs (3).

2. Suspension pendulaire selon la revendication 1, caractérisée en ce que la zone d'appui (7) de la fixation (5) du maillon de chaîne est dotée d'un creux (8), ou en ce que le boulon de ressort (3) est doté d'un méplat (9) dans la zone d'appui (7).

3. Suspension pendulaire selon les revendications 1 et 2, caractérisée en ce que les maillons de chaîne (1) sont évasés les uns par rapport aux autres dans la direction transversale de la voiture.

4. Suspension pendulaire selon les revendications 1 à 3, caractérisée en ce que les maillons de chaîne (1) sont aplatis ou dotés d'une gorge sur leurs coins (10), et en ce qu'entre les montants d'encadrement (11), une ou plusieurs traverses de liaison (12) sont disposées en dessous et au-dessus des fixations (4; 5) des maillons de chaîne.

5. Suspension pendulaire selon les revendications 1 à 4, caractérisée en ce qu'entre les maillons de chaîne (1), une vis (13) est prévue sur le logement (15) de support de ressort, pour empêcher que le boulon de ressort (3) tourne.
